**Europäisches Patentamt**

**European Patent Office**

**Office européen des brevets**

(11) Veröffentlichungsnummer: **0 103 175**
A1

# (12) EUROPÄISCHE PATENTANMELDUNG

(21) Anmeldenummer: **83107951.2**

(22) Anmeldetag: **11.08.83**

(51) Int. Cl.³: **C 08 K 11/00,** C 08 K 3/22

(30) Priorität: **11.08.82 HU 258982**

(43) Veröffentlichungstag der Anmeldung: **21.03.84**
**Patentblatt 84/12**

(84) Benannte Vertragsstaaten: **AT BE CH DE FR GB IT LI LU NL SE**

(71) Anmelder: **MAGYAR TUDOMANYOS AKADEMIA KÖZPONTI KEMIAI KUTATO INTEZET, Pusztaszeri ut 57/69, Budapest II (HU)**
Anmelder: **ENERGIAGAZDALKODASI INTEZET, 33-34, Bem-rakpart, H-1027 Budapest II (HU)**

(72) Erfinder: **Nagy, Tibor Tamás, Dipl.-Chem., Bimbó u. 105, H-1022 Budapest (HU)**
Erfinder: **Iring, geb. Knopfler, Margit, Dipl.-Chem., Kresz Géza u. 36, H-1132 Budapest (HU)**
Erfinder: **Tüdos, Ferenc, Dipl.-Chem., Felho u. 18, H-1125 Budapest (HU)**
Erfinder: **Fodor, Zsolt, Dipl.-Chem., Táviró u. 11/I, H-1098 Budapest (HU)**
Erfinder: **Magyar, Veronika, Sallai Imre u. 14-16, H-1136 Budapest (HU)**
Erfinder: **Eros, Tibor, Szliágyi E. fasor 13/15, H-1024 Budapest (HU)**
Erfinder: **Vámos, György, Dipl.-Chem., Hadik András u. 13/b, H-1125 Budapest (HU)**
Erfinder: **Tóth, András, Dipl.-Chem., Hajnóczy u. 24, H-1122 Budapest (HU)**
Erfinder: **László, Polgár, Dipl.-Masch., Schönherz Zoltán utca 4, H-2800 Tatabánya (HU)**

(74) Vertreter: **Beszédes, Stephan G. Dr., Münchener Strasse 80a Postfach 1168, D-8060 Dachau (DE)**

(54) **Thermoplastische Kunststoffmassen.**

(57) Gegenstand der Anmeldung sind thermoplastische Kunststoffmassen mit einem Gehalt an 1 oder mehr, gegebenenfalls hydrophobierten Füllstoff(en) mit hohem Eisenoxydgehalt, der beziehungsweise die auch Flugasche(n) sein kann beziehungsweise können, welche als Füllstoff(e) [einen] solche[n], der beziehungsweise die bei einem Eisenoxydgehalt von 3 bis 20 Gew.-% einen freien Calciumoxydgehalt von 0,3 bis 20 Gew.-% aufweist beziehungsweise aufweisen, in Mengen von höchstens 80 Gew.-% enthalten.

Als Füllstoff(e) kann beziehungsweise können vorteilhaft (eine) Kraftwerkflugasche(n) verwendet werden. Diese ergeben einerseits Endprodukte mit ausgezeichneten Eigenschaften und andererseits führen sie zu einer Verringerung der Umweltsbelastung.

Die Erfindung betrifft thermoplastische Kunststoffmassen, welche 1 oder mehr Füllstoff(e) mit einem erheblichen Gehalt an Eisenverbindungen enthalten.

In Kunststoffmassen werden am meisten Füllstoffe mineralischen Ursprunges, zum Beispiel gemahlenes Calciumcarbonat, Talk oder Asbest, verwendet. Die einen Füllstoff enthaltenden Kunststoffmassen haben vorteilhafte Eigenschaften, zum Beispiel eine erhöhte Oberflächenhärte und eine bessere Verschleißfestigkeit, und sind mit geringerem Aufwand verbunden.

Es ist im allgemeinen wichtig, daß die Füllstoffe Übergangsmetallverbindungen in möglichst geringen Mengen enthalten. Am meisten kommt Eisen als Verunreinigung vor. Deshalb bestimmen in den meisten Fällen die Abnehmer den Höchstgehalt an Eisen. Nach dem Fachschrifttum darf der Eisen(III)-oxydgehalt ($Fe_2O_3$-Gehalt) von Calciumcarbonat und Dolomit höchstens 0,28 Gew.-% betragen (R. Gachter, H. Müller: Taschenbuch der Kunststoff-Additive, Seite 326, Carl Hanser Verlag München, 1979). Ein grundlegender Grund für die an die Verunreinigungen gestellten strengen Anforderungen besteht darin, daß die Übergangsmetallverbindungen, insbesondere die Eisenverbindungen, die Stabilität des Polymers stark beeinträchtigen. Das den an die Füllstoffe gestellten strengen Anforderungen entsprechende Calciumcarbonat wird nur an wenigen Stellen gefördert. Trotz der hohen Transportentfernungen und des hohen Aufwandes wird ein großer Teil Europas von Frankreich mit gemahlenem Calciumcarbonat versorgt.

Es wurden auch Versuche mit Flugasche als Füllstoff durchgeführt. In diesem Falle muß jedoch eine wesentlich größere Stabilisatormenge als üblich der Masse zugesetzt werden.

Nach der sowjetischen Patentschrift 475 373 werden einer mit Kraftwerkflugasche gefüllten weichgemachten Polyvinylchloridmasse 1,6 bis 2 Gew.-Teile Stabilisator, bezogen auf 100 Gew.-Teile des Polymers zugesetzt. Praktisch können aber nur mit Stabilisatormengen im oberen Teil dieses Bereiches überhaupt Polyvinylchloridmassen mit annehmbaren Eigenschaften erhalten werden. Dies ist höher als die in weichgemachten Polyvinylchloridmassen übliche Menge von 1 bis 2 Gew.-Teil(en). Dieser Umstand ist wahrscheinlich auf die den Abbau fördernde (katalytische) Wirkung der sich in der Flugasche befindlichen Metallverbindungen, insbesondere Eisenverbindungen, zurückzuführen.

Im Beispiel 4 der US-Patentschrift 3 991 005 ist ebenfalls eine ungewöhnlich hohe Stabilisatorkonzentration erwähnt; beim Aufarbeiten von weichgemachtem Polyvinylchlorid werden 7,6 Gew.-Teile Stabilisator, bezogen auf 100 Gew.--Teile Polymer, verwendet.

Der Erfindung liegt die Aufgabe zugrunde, thermoplastische Kunststoffmassen, die einen erheblichen Gehalt an Eisenverbindungen haben, ohne einen gegenüber dem üblichen Stabilisatorgehalt erhöhten Stabilisatorgehalt aufweisen zu müssen, zu schaffen.

Das Obige wurde überraschenderweise durch die Erfindung erreicht.

Die Erfindung beruht auf der überraschenden Feststellung, daß auch Füllstoffe mit einem hohen Eisenoxydgehalt, wie Flugasche, ohne Herabsetzung der Stabilität, manchmal sogar unter Verbesserung derselben, eingesetzt werden können, falls der beziehungsweise die Füllstoff(e) freies Calciumoxyd in geeigneten Mengen enthält beziehungsweise enthalten. Diese Feststellung kann damit erklärt werden, daß die Gegenwart des Calciumoxydes die Wanderung der den Abbau katalysierenden Schwermetallionen in die Polymergrundmasse

- 4 -    0103175

(Polymermatrix) verhindert. Das Calciumoxyd ist dabei eine
stärkere Base als das Eisenoxyd und bindet deshalb die im
Laufe der Zersetzung gebildeten Säuren (im Falle von Polyvinylchlorid Salzsäure und im Falle von Polyolefinen und
anderen Kohlenwasserstoffpolymeren die während der Oxydation gebildeten Carbonsäuren), ehe diese Säuren mit dem
Eisenoxyd reagieren könnten.

Gegenstand der Erfindung sind daher thermoplastische
Kunststoffmassen mit einem Gehalt an 1 oder mehr, gegebenenfalls  hydrophobierten, Füllstoff(en) mit hohem Eisenoxydgehalt, der beziehungsweise die auch Flugasche(n) sein
kann beziehungsweise können, welche dadurch gekennzeichnet
sind, daß sie als Füllstoff(e) [einen] solche[n], der beziehungsweise die bei einem Eisenoxydgehalt ($Fe_2O_3$-Gehalt)
von 3 bis 20 Gew.-% einen freien Calciumoxydgehalt (CaO-Gehalt) von 0,3 bis 20 Gew.-% aufweist beziehungsweise aufweisen, in Mengen  von höchstens 80 Gew.-% enthalten.

Falls die erfindungsgemäßen Kunststoffmassen mehr Füllstoffe enthalten, können diese zweckmäßig als Gemische vorliegen.

Vorzugsweise ist der Eisenoxydgehalt des beziehungsweise
der Füllstoffe[s] der erfindungsgemäßen Kunststoffmassen
3 bis 16 Gew.-%.

Es ist bevorzugt, daß die erfindungsgemäßen Kunststoffmassen einen Stabilisator beziehungsweise Stabilisatoren in
Mengen von [insgesamt] höchstens 3 Gew.-%, insbesondere
höchstens 2 Gew.-%, ganz besonders 0,1 bis 2 Gew.-%, vor
allem 1 bis 2 Gew.-%, welchletztere Bevorzugung besonders
für Polyvinylchloridmassen gilt, enthalten.

Die Erfindung ermöglicht die ausgedehnte Verbreitung

- 5 -

der bisher überhaupt nicht oder nur beschränkt verwendeten Füllstoffe. Als solche Füllstoffe kommen in erster Linie die in durch Kohlenstaubfeuerung in Betrieb gehaltenen Kraftwerken gebildeten Flugaschen in Betracht. Ein wesentlicher Vorteil dieser Flugaschen gegenüber herkömmlichen Füllstoffen besteht darin, daß sie als Nebenprodukte in großen Mengen anfallen und nach Abtrennnung der geeigneten Teilchengrößenfraktion im allgemeinen unmittelbar ohne weiteres Mahlen eingesetzt werden können. Die Flugaschen entstehen in feuchtigkeitsfreiem Zustand und bei geeigneter Lagerung ist keine Trocknung erforderlich. Ein weiterer Vorteil besteht darin, daß die Flugaschen eine geringere Dichte als die meisten herkömmlichen mineralischen Füllstoffe haben.

Nach einer vorteilhaften Ausführungsform der Erfindung enthalten daher die erfindungsgemäßen Kunststoffmassen als Füllstoff(e) 1 oder mehr in Flugaschenabscheidern von Kraftwerken und/oder im Laufe des Flugaschentransportes abgetrennte Flugasche(n).

Die chemische Zusammensetzung und physikalische Struktur der verschiedenen Flugaschen können in Abhängigkeit von der Beschaffenheit der verbrannten Kohle und der anwesenden mineralischen Stoffe und der bei der Verbrennung angewandten Bedingungen bei jedem Kraftwerk unterschiedlich sein. Als wesentliche Bestandteile kommen Siliciumdioxyd ($SiO_2$), Aluminiumoxyd ($Al_2O_3$), Calciumoxyd (CaO) und Eisen(III)-oxyd ($Fe_2O_3$) in Betracht. Diese Bestandteile machen im allgemeinen mehr als 90 Gew.-% des Gesamtgewichtes der Flugasche aus. Daneben sind in geringeren Mengen weiterhin Begleitelemente, zum Beispiel Titan (Ti), Magnesium (Mg) und Schwefel (S), zugegen.

Ferner wurde überraschenderweise festgestellt, daß, wenn Kunststoffmassen, insbesondere weichgemachten Polyvinylchloridmassen, freies Calciumoxyd in Mengen innerhalb
der festgelegten Mengenbereiche enthaltende Flugaschen mit
einer Dichte von höchstens 2,6 und durchschnittlichen Teilchengrößen von höchstens 100 µm zugesetzt werden, eine
wesentlich bessere Stabilität als mit den Massen  ohne Füllstoff erreicht werden kann.

Nach einer speziellen vorteilhaften Ausführungsform der
Erfindung enthalten daher die erfindungsgemäßen Kunststoffmassen als Füllstoff(e) 1 oder mehr Kraftwerkflugasche(n)
mit einer Dichte von höchstens 2,6 und durchschnittlichen
Teilchengrößen von höchstens 100 µm. Diese spezielle Ausführungsform der Erfindung ist auch vom Vorteil, daß die
als Füllstoff am hervorragendsten verwendbare Flugaschefraktion mit Teilchengrößen innerhalb des oben angegebenen
Bereiches aus den Flugascheabscheidern. von Kraftwerken und
pneumatischen Flugascheförderersystemen selektiv gewonnen
werden kann, begleitet. Mit Rücksicht darauf, daß sich aus
den in Reihe geschalteten Flugascheabscheidern zuerst die
groben und danach die feinen Teilchen abscheiden, kann die
Stelle der Gewinnung der Flugasche der gewünschten Teilchengrößen ganz einfach gewählt werden. Durch die Verwendung als Füllstoff kann so die die größte Umweltverschmutzungsgefahr darstellende feinste Fraktion verwertet werden,
was einen zusätzlichen Vorteil darstellt. Ein weiterer Vorteil liegt darin, daß die so gewonnenen Flugaschefraktionen
in erheblichen Mengen kugelförmige Teilchen mit geschlossenen Hohlräumen enthalten, weswegen ihre Dichte kleiner
als der auf Grund der Materialzusammensetzung zu erwartende
Wert ist, so daß die Verwendung der solche Füllstoffe enthaltenden Kunststoffmassen gegenüber den herkömmliche Füllstoffe enthaltenden eine bedeutende Gewichts- und Materialersparung zur Folge hat. (Bei Ersatz von herkömmlichen Füllstoffen durch identische Gewichtsmengen von solchen Flugaschen kann eine Einsparung an Kunststoff erzielt werden).

Die Eigenschaften können dadurch weiter verbessert werden, daß als Flugaschen solche, deren Oberfläche einer Hydrophobierbehandlung unterworfen worden ist, verwendet werden. Diese Behandlung kann nach im Schrifttum im Zusammenhang mit anderen Füllstoffen beschriebenen Verfahren unter Verwendung von Stearinsäure, Calciumstearat, Ammoniumstearat, Isocyanaten, Silylierungsmitteln oder reaktionsfähigen organsichen Titanaten erfolgen.

Ferner wurde festgestellt, daß bei Verwendung von Flugaschen, deren durchschnittliche Teilchengrößen feiner als 100 $\mu$m sind, bei den üblichen Aufarbeitungsverfahren der Kunststofftechnik, zum Beispiel Kalandrieren, Schneckenpressen, Strangpressen, Kneten, Spritzgießen und Pastenbildung, weder rheologische noch andere Probleme auftreten.

Außer oder statt Flugaschen können in den erfindungsgemäßen Kunststoffmassen als Füllstoffe auch andere mit Eisenoxyd verunreinigte Substanzen, deren Verwendung bisher nicht möglich war, vorliegen.

Es können in den erfindungsgemäßen Kunststoffmassen als Flugaschen oder andere eisenoxydhaltige Füllstoffe auch solche, deren freier Calciumoxydgehalt von Haus aus nicht innerhalb des oben festgelegten Bereiches liegt, eingesetzt werden, wenn der freie Calciumoxydgehalt durch Zugabe von Flugasche beziehungsweise einem anderen Füllstoff mit hohem Calciumoxydgehalt oder einer anderen calciumoxydhaltigen pulverförmigen Substanz, zum Beispiel von Kalkhydrat, auf den gewünschten Wert innerhalb der obigen Festlegung eingegestellt worden ist.

In den erfindungsgemäßen Kunststoffmassen können bis zu 80 Gew.-% Füllstoff enthalten sein, was ebenfalls einen Vorteil darstellt.

Besonders vorteilhaft ist die Erfindung auf Polyvinylhalogenidmassen, vor allem Polyvinylchloridmassen, und Polyolefinmassen, vor allem Polypropylenmassen, sowie andere Kohlenwasserstoffpolymermassen als thermoplastische Kunststoffmassen anwendbar.

Die Erfindung wird an Hand der folgenden Beispiele näher erläutert.


## Beispiel 1

Es wurden unter Verwendung von Polyvinylchlorid nach an sich bekannten Verfahrensweisen der Kunststofftechnik 4 Mischungen der folgenden Zusammensetzung hergestellt.

0103175

| Bestandteile | Menge in Gew.-Teilen |
|---|---|
| Polyvinylchlorid mit einem K-Wert von 67 $\pm$ 1 (Meßverfahren: ungarische Norm MSz 7760/5) und einer Schüttdichte von 0,57 $\pm$ 0,03 g/cm$^3$ (Meßverfahren: ungarische Norm und Comecon-Norm MSZ-KGSt 1691) [Ongrovil $^{\textcircled{R}}$ S-5167, Hersteller: Borsodi Vegyi Kombinát, Kazincbarcika, Ungarn] | 100 |
| Di-{2-(äthyl)-hexyl}-phthalat [Eviplast $^{\textcircled{R}}$ 80, Hersteller: Egyesült Vegyimüvek, Budapest, Ungarn] (Weichmacher) | 40 |
| Flugasche (durchschnittliche Teilchengröße unter 45 $\mu$m; CaO- und $Fe_2O_3$-Gehalt wie in der folgenden Tabelle 1 angegeben) | 50 |
| Barium/Cadmium-Stabilisator [Naftovin $^{\textcircled{R}}$ BM 30, Hersteller: Metallgesellschaft AG, Frankfurt/Main, Bundesrepublik Deutschland] | 2 |
| Stearinsäure (Gleitmittel) | 0,3 |

Die dynamische Stabilität dieser Mischungen wurde in einer Knetkammer bei 190°C und einer Umdrehungszahl von 40 Minuten$^{-1}$ durch Registrieren des Drehmomentes gemessen (Brabender-Stabilität). Aus den bei 185°C durch 10 Minuten langes Kneten hergestellten Mischungen wurden 1 mm dicke Platten gepreßt. Die Zerreißfestigkeit und Bruchdehnung dieser Platten wurde gemäß der Norm No. MSz 5546 (ungarische Norm Nr. 5546) bestimmt. Außer diesen Daten wurde auch die Dichte der Produkte gemessen. Die erhaltenen Meßergebnisse sind in der folgenden Tabelle 1 zusammengestellt. In dieser Tabelle 1 wurden als Vergleichsmaterialien mit einer Flugasche ohne freien Calciumoxydgehalt (CaO-Gehalt) [Vergleichspolyvinylchloridmasse A] sowie mit Kreide gefüllte [Vergleichspolyvinylchloridmasse B] und füllstofffreie [Vergleichspolyvinylchloridmasse C] Proben von sonst dieselbe Zusammensetzung aufweisenden Polyvinylchloridmassen herangezogen.

Tabelle 1

| Polyvinylchloridmasse Nr. | Füllstoff | | | Eigenschaften | | | | | Be-mer-kun-gen |
|---|---|---|---|---|---|---|---|---|---|
| | Art | Freier CaO- -Gehalt der Flugasche in Gew.-% | $Fe_2O_3$-Ge-halt der Flugasche in Gew.-% | Stabili-tätszeit in Minu-ten | Zerreißfestig-keit in $N/mm^2$ | Bruchdehnung in % | Dichte des Füllstoffes in $g/cm^3$ | Dichte des Endpro-duktes in $g/cm^3$ | |
| I (erfindungsgemäß) | Flugasche | 0,39 | 8,6 | 37 | 12,8 ± 0,3 | 144 ± 5 | 2,01 | 1,39 | a) |
| II (erfindungsgemäß) | Flugasche | 0,71 | 7,7 | 43 | 13,0 ± 0,4 | 151 ± 6 | 2,12 | 1,41 | a) |
| III (erfindungsgemäß) | Flugasche | 1,32 | 8,9 | 44 | 13,7 ± 0,2 | 148 ± 6 | 2,16 | 1,41 | a) |
| IV (erfindungsgemäß) | Flugasche | 7,10 | 12,1 | 45 | 14,2 ± 0,4 | 167 ± 14 | 2,50 | 1,45 | b) |
| Vergleichspolyvinyl-chloridmasse A | Flugasche | 0 | 8,3 | 26 | 12,5 ± 0,4 | 112 ± 5 | 2,13 | 1,41 | a) |
| Vergleichspolyvinyl-chloridmasse B | Kreide | - | - | 42 | 13,4 ± 0,3 | 129 ± 9 | 2,71 | 1,47 | b) |
| Vergleichspolyvinyl-chloridmasse C | kein | - | - | 34 | 23,3 ± 0,3 | 267 ± 5 | - | 1,26 | c) |

Bemerkungen:

a) Scharfes Drehmoment in der Abbauphase.

b) Langsame Steigerung des Drehmomentes in der Abbauphase.

c) Nach dem Anfang des Abbaues steigt das Drehmoment plötzlich auf einen konstanten Wert an.

Aus der obigen Tabelle 1 gehen die günstigen Wirkungen der Gegenwart des freien Calciumoxydes eindeutig hervor, indem die erfindungsgemäßen Polyvinylchloridmassen wesentlich bessere Eigenschaften hatten als die füllstoffhaltigen Vergleichspolyvinylchloridmassen.


### Beispiel 2

Es wurden unter Verwendung der im Beispiel 1 angegebenen Mengenanteile der in diesem verwendeten Materialien Polyvinylchlorid, Di-{2-(äthyl)-hexyl}-phthalat (Weichmacher), Barium/Cadmium-Stabilisator und Stearinsäure (Gleitmittel) Polyvinylchloridmassen mit Flugaschen mit einem freien Calciumoxydgehalt (CaO-Gehalt) von 1,5 beziehungsweise 18 Gew.-% und einem Eisen(III)-oxydgehalt ($Fe_2O_3$-Gehalt) von 9,9 beziehungsweise 7,3 Gew.-% sowie einer durchschnittlichen Teilchengröße unter 10 µm als Füllstoffen bereitet [Polyvinylchloridmassen Nr. Ia, Ib, IIa und IIb in der folgenden Tabelle II]. Es wurden auch Massen, in welchen eine Flugasche, deren freier Calciumoxydgehalt (CaO-Gehalt) durch Einstellen durch Vermischen von 2 Flugaschen mit verschiedenen freien Calciumoxydgehalten (CaO-Gehalten), und zwar solchen mit einem freien Calciumoxydgehalt (CaO-Gehalt) von 0,16 Gew.-% beziehungsweise 18 Gew.-% in einem Gewichtsverhältnis von 9 : 10, auf 1,94 Gew.-% erhalten worden ist, verwendet wurde, [Vergleichspolyvinylchloridmassen Nr. IIIa und IIIb in der folgenden Tabelle 2] bereitet. Die dynamische Stabilität sowie die Zerreißfestigkeit und Bruchdehnung der Massen wurden in der im Beispiel 1 angegebenen Weise bestimmt und es wurde auch die Dichte des Endproduktes gemessen. Die erhaltenen Ergebnisse sind in der folgenden Tabelle 2 zusammengestellt.

In der Tabelle 2 wurden als Vergleichsmaterialien mit einer Flugasche ohne freien Calciumoxydgehalt (CaO-Gehalt) [Vergleichspolyvinylchloridmassen Aa und Ab] sowie mit Kreide gefüllte [Vergleichspolyvinylchloridmasse B] und füllstofffreie [Vergleichspolyvinylchloridmasse C] Proben von sonst dieselbe Zusammensetzung aufweisenden Polyvinylchloridmassen herangezogen.

## Tabelle 2

| Polyvinylchloridmasse Nr. | Füllstoff | | | | Eigenschaften | | | | | Bemerkungen |
|---|---|---|---|---|---|---|---|---|---|---|
| | Art | Freier CaO-Gehalt der Flugasche in Gew.-% | $Fe_2O_3$-Gehalt der Flugasche in Gew.-% | Füllstoffgehalt der Masse in Gew.-% | Stabilitätszeit in Minuten | Zerreißfestigkeit in $N/mm^2$ | Bruchdehnung in % | Dichte des Füllstoffes in $g/cm^3$ | Dichte des Endproduktes in $g/cm^3$ | |
| Ia (erfindungsgemäß) | Flugasche | 1,50 | 9,9 | 26 | 42 | 15,8 ± 0,5 | 189 ± 9 | 2,19 | 1,42 | b) |
| Ib (erfindungsgemäß) | Flugasche | 1,50 | 9,9 | 52 | 39 | 10,4 ± 0,4 | 160 ± 20 | 2,19 | 1,62 | b) |
| IIa (erfindungsgemäß) | Flugasche | 18,0 | 7,3 | 26 | 42 | 17,4 ± 0,8 | 162 ± 13 | 2,60 | 1,46 | b) |
| IIb (erfindungsgemäß) | Flugasche | 18,0 | 7,3 | 52 | 40 | 10,2 ± 0,2 | 152 ± 21 | 2,60 | 1,71 | b) |
| IIIa (erfindungsgemäß) | Flugasche | 1,94 | 9,7 | 26 | 41 | 15,1 ± 0,7 | 192 ± 12 | 2,34 | 1,44 | b) |
| IIIb (erfindungsgemäß) | Flugasche | 1,94 | 9,7 | 52 | 41 | 9,7 ± 0,5 | 148 ± 15 | 2,34 | 1,65 | b) |
| Vergleichspolyvinyl-chloridmasse Aa | Flugasche | 0,16 | 10,1 | 26 | 16 | 15,7 ± 0,5 | 203 ± 10 | 2,29 | 1,43 | a) |
| Vergleichspolyvinyl-chloridmasse Ab | Flugasche | 0,16 | 10,1 | 52 | 10 | 10,0 ± 0,3 | 50 ± 17 | 2,29 | 1,64 | a), c) |
| Vergleichspolyvinyl-chloridmasse B | Kreide | - | - | 26 | 42 | 13,4 ± 0,3 | 129 ± 9 | 2,71 | 1,47 | b) |
| Vergleichspolyvinyl-chloridmasse C | kein | - | - | 52 | 40 | 7,9 ± 0,5 | 152 ± 20 | 2,71 | 1,75 | b) |

Bemerkungen:

a) Scharfes Drehmomentmaximum in der Abbauphase.    b) Langsame Drehmomentsteigerung in der Abbauphase.

c) Die Zersetzung beginnt bereits während der Aufarbeitung.

Aus der obigen Tabelle 2 gehen die günstigen Wirkungen der Gegenwart des freien Calciumoxydes in den erfindungsgemäß festgelegten Mengen eindeutig hervor, indem die erfindungsgemäßen Polyvinylchloridmassen wesentlich bessere Eigenschaften hatten als die Vergleichspolyvinylchloridmassen, was auch gegenüber den Vergleichspolyvinylchloridmassen, welche freies Calciumoxyd in geringeren als den erfindungsgemäß festgelegten Mengen enthalten, (Vergleichspolyvinylchloridmassen Aa und Ab) gilt.

## Beispiel 3

Aus dem ersten von 3 in Reihe geschalteten elektrostatischen Staubabscheidern eines Kraftwerkes wurde die Flugasche getrennt gesammelt. Die Dichte der erhaltenen Fraktion betrug 1,94 g/cm$^3$, der freie Calciumoxydgehalt (CaO-Gehalt) war 0,57 Gew.-% und der Eisen(III)-oxydgehalt ($Fe_2O_3$-Gehalt) betrug 7,7 Gew.-%. Etwa 99 Gew.-% der Menge der Flugasche fiel in den Teilchengrößenbereich von 2 bis 35 µm. Ferner wurden in einem pneumatischen Flugaschefördersystem eines anderen Kraftwerkes die aus den letzten 2 Zyklonen von 3 in Reihe geschalteten Zyklonen gesammelten Flugaschen vereinigt. Die Dichte dieser Fraktion betrug 2,13 g/cm$^3$, der freie Calciumoxydgehalt (CaO-Gehalt) war 1,50 Gew.-% und der Eisen(III)-oxydgehalt ($Fe_2O_3$-Gehalt) betrug 9,9 Gew.-%. Etwa 99 Gew.-% der Menge dieser Flugasche fiel in den Teilchengrößenbereich von 5 bis 25 µm.

Es wurden unter Verwendung einer Mischung der obigen 2 Flugaschen im Gewichtsverhältnis von 1 : 1 weichgemachte Polyvinylchloridmassen mit einem Füllstoffgehalt von 50 Gew.-% und sonst mit den im Beispiel 1 angegebenen Mengenanteilen in diesem verwendeten Materialien Polyvinylchlorid, Di-{2-(äthyl)-hexyl}-phthalat (Weichmacher), Barium/Cadmium-Stabilisator und Stearinsäure (Gleitmittel) hergestellt. Aus diesen Massen wurden mit Hilfe von her-kömmlichen Verfahrenstechniken beziehungsweise Technolo-gien Polyvinylchloridfolien mit einer Stärke von 0,65 mm kalandriert. Die Eigenschaften der erhaltenen Produkte waren denen der unter Verwendung der gleichen Menge von suspendierter Kreide erhaltenen Erzeugnisse nicht unterlegen, obwohl die Dichte der Flugaschen wesentlich geringer als die der Kreise ($2,71$ g/cm$^3$) war. Die Verwendung der Flugasche hatte also eine Einsparung an Polyvinylchlorid und Weichmacher zur Folge.

## Beispiel 4

Es wurde eine Mischung der im Beispiel 3 genannten 2 Flugaschefraktionen im Gewichtsverhältnis von 1 : 1 als Füllstoff zur Herstellung einer geschäumten weichgemachten Polyvinylchloridplatte verwendet. Die Masse enthielt 55 Gew.-Teile des im Beispiel 1 verwendeten Di-{2-(äthyl)--hexyl}-phthalates als Weichmacher, 3 Gew.-Teile des im Beispiel 1 verwendeten Barium/Cadmium-Stabilisators, 9 Gew.-Teile Schäummittel auf Azodicarbonamidbasis [Evipor ®, Hersteller: Egyesült Vegyimüvek, Budapest, Ungarn] und 20 Gew.-Teile des genannten Füllstoffes, bezogen auf 100 Gew.-Teile Polyvinylchlorid. Aus diesen Bestandteilen wurde eine Paste hergestellt, aus welcher ein Film (500 g/m$^2$) gegossen wurde. Der so erhaltene Film wurde 2 Minuten lang bei 140$^o$C unter statischen Bedingungen einem Gelieren unterworfen und danach 3 Minuten lang bei 190$^o$C geschäumt. Der erhaltene weichgemachte Polyvinylchloridschaum wies eine geschlossene Zellenstruktur und eine einheitliche Porenverteilung auf. Die Eigenschaften des Produktes waren denjenigen eines unter Verwendung derselben Menge von gefällter Kreide hergestellten Schaumes gleich.

## Beispiel 5

Es wurde die Fraktion mit einer durchschnittlichen Teilchengröße unter 10 $\mu$m von einer Kraftwerkflugasche gesammelt. Der freie Calciumoxydgehalt (CaO-Gehalt) dieser Fraktion war 1,5 Gew.-% und ihr Eisen(III)-oxydgehalt ($Fe_2O_3$-Gehalt) betrug 9,9 Gew.-%. In einem Schnellmischer wurden 100 Gew.-Teile Polyvinylchlorid, 5 Gew.-Teile der genannten Flugasche, 2,5 Gew.-Teile des Blei-Stabilisators Blei(II)-oxyd . Blei(II)-stearat $\{PbO . Pb(n-C_{17}H_{35}COO)_2\}$ und 0,1 Gew.-Teil Gleitmittel miteinander vermischt. Aus der erhaltenen Masse wurde bei einer Zonentemperatur von 180, 190 und 200°C und einer Werkzeugtemperatur von 205°C eine Platte mit einer Stärke von 1,5 mm stranggepreßt. Die Zerreißfestigkeit dieser Platte betrug 41,2 $\pm$ 1,4 N/mm$^2$ und ihre Bruchdehnung war 47 $\pm$ 8%.

## Beispiel 6

Es wurde die im Beispiel 2 genannte Flugasche mit einem freien Calciumoxydgehalt (CaO-Gehalt) von 1,50 Gew.-% beziehungsweise 18,0 Gew.-% mit 2 Gew.-% Stearinsäure, bezogen auf die Menge der Flugasche, einer Oberflächenbehandlung unterworfen.

Mit jeder dieser Flugaschen wurde jeweils eine 26 Gew.-% Flugasche enthaltende Polyvinylchloridmasse unter Verwendung der im Beispiel 1 angegebenen anderen Materialien als die Flugasche in den aus dem Beispiel 1 sich ergebenden Mengenverhältnissen wie dort angegeben hergestellt, aus welcher ebenfalls auf die im Beispiel 2 beschriebene Weise Platten gepreßt wurden.

In einem nderen Versuch wurde 0,5 Gew.-% eines organischen Titanates (Produkt der Firma Kenrich Petrochemicals Inc. mit der Handelsbezeichnung KR55) als Haftmittel, bezogen auf die Menge der jeweiligen Flugasche, verwendet. Aus den beiden so behandelten Flugaschen wurde je 1 weichgemachte Polyvinylchloridmasse mit einem Füllstoffgehalt von 26 Gew.-% hergestellt.

Beide Oberflächenbehandlungen hatten eine wesentliche Erhöhung der Zerreißfestigkeit des Polyvinylchlorides zur Folge. Bei der Anwendung der Stearinsäurebehandlung betrug die Erhöhung der Zerreißfestigkeit 25 bis 50% und im Falle der Titanatbehandlung 60 bis 80%. Die Bruchdehnung des Produktes und die Aufarbeitungsstabilität der Masse blieben innerhalb der üblichen Fehlergrenze unverändert.

## Beispiel 7

Es wurden nach der im Beispiel 1 beschriebenen Verfahrensweise mit den in diesen angegebenen Zusammensetzungen 3 mit Talk gefüllte Polyvinylchloridmassen hergestellt. Bei der Herstellung der ersten Masse wurde Talk mit einem hohen Eisengehalt [6 Gew.-% Eisen(III)-oxyd ($Fe_2O_3$)] und einem freien Calciumoxydgehalt (CaO-Gehalt) von 2 Gew.-%, welcher mit gebranntem Kalk eingestellt worden ist, {Polyvinylchloridmasse Nr. I}, bei der Herstellung der zweiten Masse wurde Talk mit demselben hohen Eisengehalt [6 Gew.-% Eisen(III)-oxyd ($Fe_2O_3$)] ohne Calciumoxydgehalt {Vergleichspolyvinylchloridmasse A} und bei der Herstellung

0103175

der dritten Masse Talk mit niedrigem Eisengehalt
[ $< 0,2$ Gew.-% Eisen(III)-oxyd ($Fe_2O_3$)] {Vergleichspolyvinylchloridmasse B} ohne Calciumoxydgehalt als Füllstoff
verwendet. Die dynamische Stabilität der Massen ist in der
folgenden Tabelle 3 zusammengestellt.

Tabelle 3

| Polyvinyl-chlorid-masse Nr. | Füllstoff Talk | | Stabilitäts-zeit in Minuten |
|---|---|---|---|
| | $Fe_2O_3$-Gehalt in Gew.-% | Freier CaO- -Gehalt | |
| I (erfindungsgemäß) | 6,0 | 2 | 40 |
| Vergleichspolyvi-nylchloridmasse B | $< 0,2$ | - | 33 |
| Vergleichspolyvi-nylchloridmasse A | 6,0 | - | 28 |

Aus der obigen Tabelle 3 geht hervor, daß die erfindungsgemäße Polyvinylchloridmasse (I) eine wesentlich höhere Stabilitätszeit als die Vergleichspolyvinylchloridmassen hatte.

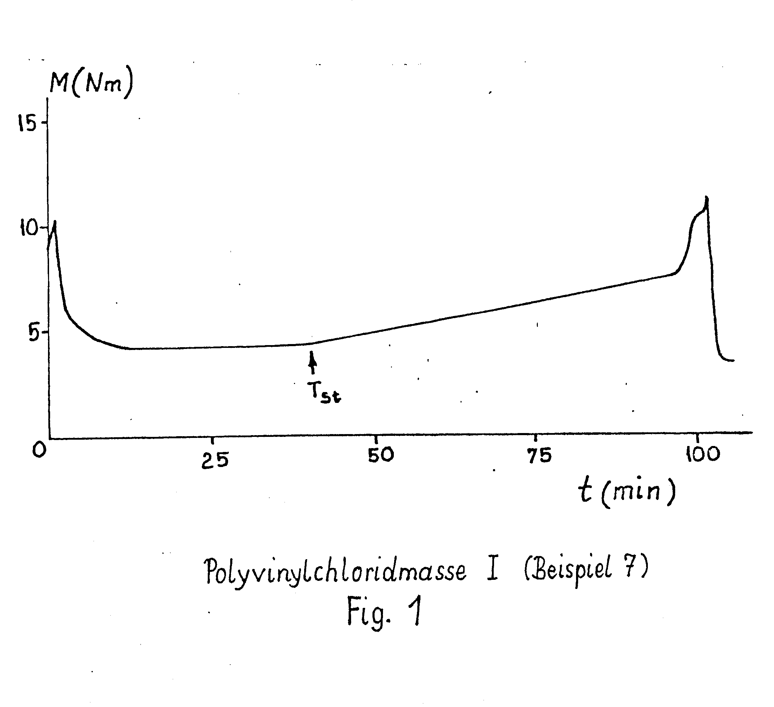

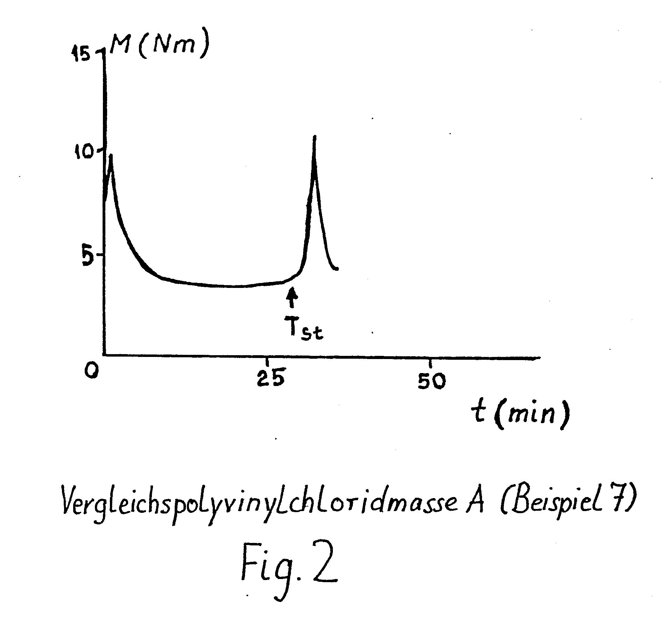

Es wurden auch Plastogramme der in der obigen Tabelle 3
angegebenen erfindungsgemäßen Polyvinylchloridmasse I und
Vergleichspolyvinylchloridmasse A [Drehmoment {M(Nm)} als Funktion der Zeit {t (min)}] bei 190°C und einer Umdrehungszahl von 40 Minuten$^{-1}$ angefertigt. Die erhaltenen Ergebnisse sind in den beiliegenden Figuren 1 und 2 veranschaulicht.
In den Figuren 1 und 2 ist die Stabilitätszeit mit einem
Pfeil und der Abkürzung "$T_{st}$" bezeichnet.

Aus den Figuren 1 und 2 geht folgendes hervor:

Bei der erfindungsgemäßen Polyvinylchloridmasse I
(Figur 1) lief der Abbau beziehungsweise die Drehmomentsteigerung langsam ab.

Bei der Vergleichspolyvinylchloridmasse A (Figur 2)
fand nach dem Beginn des Abbaues eine plötzliche Erhöhung
des Drehmomentes statt, ein scharfes Momentmaximum trat
auf und in der Abbauphase war eine rasche Zersetzung festzustellen.

Bei einer ausführlicheren Darlegung der Figuren 1 und 2
ist folgendes festzustellen.

Bei der Masse mit freiem Calciumoxydgehalt (CaO-Gehalt)
[erfindungsgemäße Polyvinylchloridmasse I] {Figur 1} erfolgte
die Vernetzung im Vergleich zur Vergleichspolyvinylchloridmasse A {Figur 2} später und viel langsamer und dieser Vorgang beschleunigte sich erst nach 98 Minuten. Nach der Stabilitätszeit verlief bis zum "Anbrennen" eine lange Zeitdauer.

Bei der kein freies Calciumoxyd (CaO) enthaltenden
Probe [Vergleichspolyvinylchloridmasse A] fand nach 28 Minuten ein rascher Abbau statt, die Masse wurde vernetzt
und deshalb wurde das zum Kneten erforderliche Drehmoment
höher. Danach zerkleinerten die Knetarme die vernetzte

Masse mechanisch, was zu einer Verminderung des Drehmomentes führte. (Bei Verwendung von solchen sich rasch zersetzenden Massen findet im Falle von Betriebsstörungen ein sehr schwerwiegendes Anbrennen statt).


## Beispiel 8

Es wurde die im Beispiel 2 genannte Flugasche mit einem freien Calciumoxydgehalt (CaO-Gehalt) von 1,50 Gew.-% und zur Erzeugung einer Vergleichspolypropylenmasse die im Beispiel 2 genannte Flugasche mit einem freien Calciumoxydgehalt (CaO-Gehalt) von 0,16 Gew.-% jeweils in einer Menge von 15 Gew.-% bei einer Temperatur von 180°C unter Verwendung eines inneren Rührers einem isotaktischen Polypropylen mit einem Schmelzindex {melt flow index} von 3,5 g/10 Minuten bei einer Temperatur von 190°C und unter einem Druck von 5 kg [Meßverfahren: DIN 53735] und mit einer Dichte von 0,9 g/cm$^3$ bei 23°C [Meßverfahren: DIN 53749] [Tipplen $^®$ H 631F, Hersteller: Tiszai Vegyi Kombinát, Leninváros, Ungarn] sowie 0,5 Gew.-% Calciumstearat (Gleitmittel), bezogen auf das isotaktische Polypropylen, und 0,1 Gew.-% eines Lichtstabilisators [Tinuvin $^®$ 144, Hersteller: Ciba-Geigy, Basel, Schweiz], bezogen auf das isotaktische Polypropylen, zugemischt. Den Massen wurde eigens kein Antioxydationsmittel zugesetzt. Aus dieser Mischung wurden bei 190°C Platten mit einer Stärke von 1 mm gepreßt. Es wurden die Zerreißeigenschaften dieser Platten gemessen. Auch wurde die Oxydationsstabilität der Massen durch die Induktionsperiode der bei 170°C in reinem Sauerstoff (Druck 100 kPa) gemessenen Sauerstoffaufnahmekurve charakterisiert. Die erhaltenen Ergebnisse sind in der folgenden Tabelle 4 zusammengestellt.

## Tabelle 4

| Polypropylen- masse Nr. | Art | Füllstoff | | Oxydations- stabilitäts- zeit in Minuten | Zerreiß- festig- keit in $N/mm^2$ |
|---|---|---|---|---|---|
| | | Freier CaO-Gehalt der Flugasche in Gew.-% | $Fe_2O_3$- -Gehalt der Flugasche in Gew.-% | | |
| I. (erfindungsgemäß) | Flug- asche | 1,50 | 9,9 | 186 | 28,2 ± 0,3 |
| Vergleichspoly- propylenmasse | Flug- asche | 0,16 | 10,1 | 25 | 27,6 ± 0,6 |
| Blind- beziehungsweise Kontrollversuch | - | - | - | 145 | 30,6 ± 0,5 |

Aus der obigen Tabelle 4 geht hervor, daß die erfindungsgemäße Polypropylenmasse eine viel höhere Oxydationsstabilität als die Vergleichspolypropylenmasse bei geringfügig höherer Zerreißfestigkeit als die der letzteren hatte.

Patentansprüche

Patentansprüche

1.) Thermoplastische Kunststoffmassen mit einem Gehalt an
1 oder mehr, gegebenenfalls hydrophobierten, Füllstoff(en) mit hohem Eisenoxydgehalt, der beziehungsweise die auch Flugasche(n) sein kann beziehungsweise können, dadurch gekennzeichnet, daß sie als
Füllstoff(e) [einen] solche[n], der beziehungsweise
die bei einem Eisenoxydgehalt von 3 bis 20 Gew.-%
einen freien Calciumoxydgehalt von 0,3 bis 20 Gew.-%
aufweist beziehungsweise aufweisen, in Mengen von
höchstens 80 Gew.-% enthalten.

2.) Kunststoffmassen nach Anspruch 1, dadurch gekennzeichnet, daß der Eisenoxydgehalt ihres beziehungsweise
ihrer Füllstoffe[s] 3 bis 16 Gew.-% ist.

3.) Kunststoffmassen nach Anspruch 1 oder 2, dadurch gekennzeichnet, daß sie einen Stabilisator beziehungsweise Stabilisatoren in Mengen von [insgesamt] höchstens 2 Gew.-%, insbesondere 1 bis 2 Gew.-%, enthalten.

4.) Kunststoffmassen nach Anspruch 1 bis 3, dadurch gekennzeichnet, daß sie als Füllstoff(e) 1 oder mehr
in Flugaschenabscheidern von Kraftwerken und/oder im
Laufe des Flugaschentransportes abgetrennte Flugasche(n) enthalten.

5.) Kunststoffmassen nach Anspruch 1 bis 4, dadurch gekennzeichnet, daß sie als Füllstoff(e) 1 oder mehr
Kraftwerkflugasche(n) mit einer Dichte von höchstens
2,6 und durchschnittlichen Teilchengrößen von höchstens 100 µm enthalten.

L. STEPHAN G. BESZÉDES
PATENTANWALT
8 DACHAU bei MÜNCHEN
MÜNCHENER STR. 80 a
LEPHON: DACHAU 4371

MAGYAR TUDOMÁNYOS AKADÉMIA KÖZPONTI KÉMIAI KUTATÓ INTÉZET
und
ENERGIAGAZDÁLKODÁSI INTÉZET
Patentanmeldung

P. 1 789 EU

M(Nm)

15

10

5

0

25    50    75    100

t (min)

$T_{st}$

Polyvinylchloridmasse I (Beispiel 7)

Fig. 1

Vergleichspolyvinylchloridmasse A (Beispiel 7)

Fig. 2

TEPHAN G. BESZÉDES
PATENTANWALT
IACHAU bei MÜNCHEN
VCHENER STR. 80 a
PHON: OACHAU 4371

MAGYAR TUDOMÁNYOS AKADÉMIA KÖZPONTI KÉMIAI KUTATÓ INTÉZET
und
ENERGIAGAZDÁLKODÁSI INTÉZET
Patentanmeldung

P 1 789 EU

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,D | US-A-3 991 005 (R. WALLACE) * Spalte 3, Tabelle 1; Beispiele 2,3,5,14,15,16; Spalte 4, Tabelle 2; Beispiele 23-26 * | 1-5 | C 08 K 11/00 C 08 K 3/22 |
| | ----- | | |

RECHERCHIERTE SACHGEBIETE (Int. Cl. ³)

C 08 K
C 08 L

Der vorliegende Recherchenbericht wurde für alle Patentansprüche erstellt.

| Recherchenort | Abschlußdatum der Recherche | Prüfer |
|---|---|---|
| DEN HAAG | 23-11-1983 | HOFFMANN K.W. |

EPA Form 1503. 03.82